# FASCICULE DE BREVET EUROPEEN

(11) **EP 0 488 981 B1**
(45) Date de publication et mention de la délivrance du brevet: **21.09.1994**
(21) Numéro de dépôt: 91870180.6
(22) Date de dépôt: 12.11.1991
(51) Int. Cl.: A01C 11/02

(54) **Machine agricole pour la plantation mécanique de plantes**
Pflanzmaschine
Transplanting machine

(30) Priorité: 23.11.1990 BE 9001116
(43) Date de publication de la demande: 03.06.1992
(73) Titulaire: Perdu, Geert, B-8840 Staden (BE)
(72) Inventeur: Perdu, Geert, B-8840 Staden (BE)
(74) Mandataire: Dopchie, Jean-Marc

(56) Documents cités:
- DE-C- 491 768
- DE-C- 849 197
- DE-C- 928 130
- FR-A- 1 424 050

## Description

Pour la culture de certaines plantes, le système mettant en oeuvre des pots à repiquer est de plus en plus utilisé. Ce système consiste à planter les semences de la plante dans des carrés denses. Les plantules sont cultivées dans des conditions idéales dans une serre jusqu'à ce qu'elles aient une hauteur déterminée. Ensuite, les pots à repiquer sont plantés en pleine terre de manière que la plante puisse encore se développer.

En principe, la plantation se fait en trois étapes successives : tout d'abord un soc creuse un sillon dans la terre, les pots à repiquer y sont placés et le sillon est refermé à l'aide de roues de tassement.

La mise en place dans le sillon se fait autant manuellement que mécaniquement.

Dans le brevet belge n° 903 064, on décrit une machine agricole dotée d'un mécanisme de positionnement dans lequel des voies de guidage fixes coopèrent avec des galets de roulement qui sont fixés à des douilles de positionnement mobiles dotées d'un volet et qui effectuent l'ouverture de ce volet et le basculement de la douille de positionnement.

Le document DE-C-928130 décrit une machine anologue à celle de la demande en examen, comprenant un soc, un système à chaîne et des roues de tassement, la chaîne se déplaçant de manière continue et étant dotée de plaques de pression ou des fers de positionnement fixés à la chaîne, les plantes semées dans des pots à repiquer, glissant dans une voie de glissement montée sous le trajet descendants de la chaîne, mais contrairement à la demande en examen, cette voie de glissement n'est pas dotée de moyens de freinage.

L'objet de la présente invention vise une machine agricole dans laquelle la plantation des pots à repiquer peut se faire à plus grande vitesse et avec moins d'heures de travail sans que l'écartement soit trop court ni qu'il y ait de perte quelconque.

La machine agricole selon l'invention est composée en principe de trois parties : un soc qui ouvre un sillon dans la terre, un système à chaîne doté de moyens permettant de manipuler et de planter les pots à repiquer et des roues de tassement pour refermer le sillon.

La machine agricole selon la présente invention est caractérisée en ce que la voie de glissement est dotée des lames de freinage qui contiennent le mouvement glissant des pots à repiquer sous la pression du fer de positionnement concerné.

Par ailleurs, la machine agricole selon un mode particulier de la présente invention est caractérisée en ce que les plaques de pression, qui poussent les pots à repiquer sur la voie de glissement, sont montées à rotation de manière à pouvoir être ajustées sur la chaîne.

D'autres caractéristiques et avantages de la machine agricole selon l'invention apparaîtront à la lumière de la description suivante d'une telle machine en se référant aux dessins ci-annexés dans lesquels :
La figure 1 est une vue latérale schématique d'une machine agricole selon la présente invention;
La figure 2 est une vue schématique de dessus du système de chargement de la machine agricole telle qu'elle est représentée dans la figure 1;

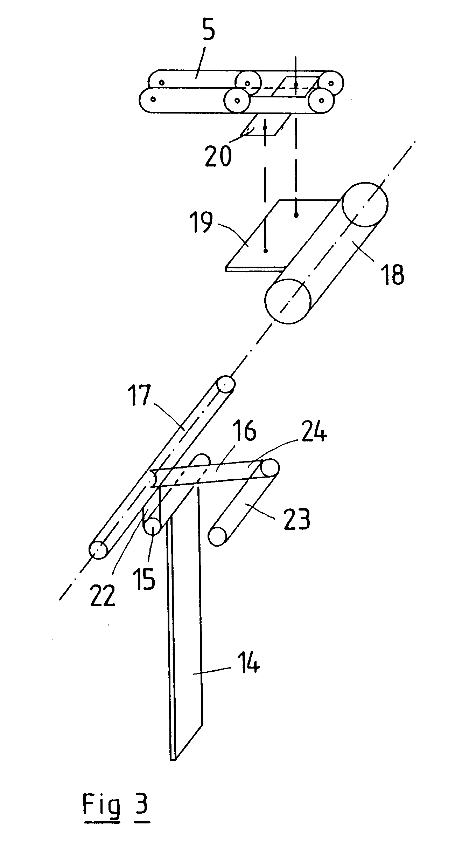

La figure 3 est une vue en perspective explosée du dispositif de fixation d'une plaque de pression à la chaîne; et

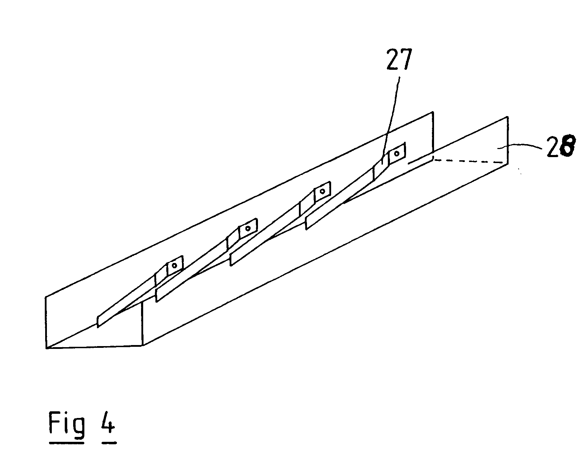

La figure 4 est une vue en perspective de la voie de glissement utilisée dans cette machine.

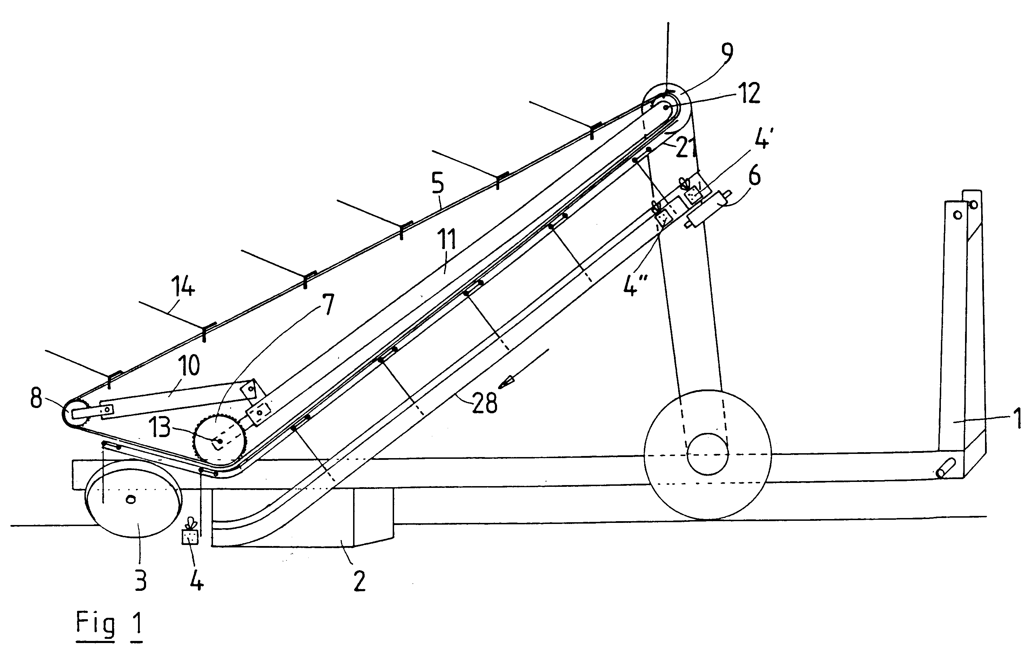

Une machine agricole selon la présente invention, telle que représentée dans la figure 1, est constituée d'un bâti de véhicule tiré par un tracteur agricole qui n'est pas représenté. Sur le bâti (1) de ce véhicule de traction est fixé un soc (2) qui ouvre un sillon, tandis qu'à l'arrière deux roues de tassement obliques (3) referment le sillon de manière connue, une fois que le pot à repiquer concerné (4) a été disposé dans le sillon. A cet effet, on fait usage d'une chaîne (5) qui tourne de manière continue et entraîne les pots à repiquer (4′, 4˝) à partir d'une bande de transport (6) chargée de ces pots.

La chaîne (5) est entraînée par une roue d'entraînement dentée (7) qui est elle-même mise en mouvement sous l'action de la traction du véhicule par le tracteur tandis que les roues dentées de guidage (8 et 9) jouent le rôle de supports et assurent le circuit fermé de la chaîne (5). La roue de guidage (8) est fixée à une tige 10 qui est réglable dans le sens de la longueur et qui est fixée à une poutre (11) pour régler la tension de la chaîne, tandis que la roue de guidage (9) tourne autour d'un axe (12) fixé à l'extrémité supérieure de la poutre (11) qui est elle-même réglable sur sa longueur à partir de l'axe (13) de la roue dentée (7).

La chaîne (5) est dotée, à intervalles réguliers les uns des autres, de fers de positionnement (14) pour entraîner les pots à repiquer (4′, 4˝). Ces fers de positionnement (14) sont fixés à une barrette (15) qui est elle-même fixée à un système de barreaux (16) dont un bras (17) peut être inséré dans une buse (18) qui est fixée à la chaîne (5) par l'intermédiaire des plaquettes (19 et 20) qui sont soudées respectivement à la chaîne (5) et à la buse (18). La longueur du bras (17) du système de barreaux (16), auquel les fers de positionnement (14) sont fixés, est plus grande que celle de la buse (18) dans laquelle le bras (17) est inséré, si bien que les extrémités de ce bras (17) ressortent des deux côtés de la buse (18) qui s'appuient tous deux contre les voies de guidage (21), qui sont parallèles à la chaîne (5) dans son mouvement descendant lorsque les fers de positionnement (14) qui sont fixés à la chaîne (5) entraînent les pots à repiquer (4, 4′, 4˝).

Comme la barrette (15), à laquelle le fer de positionnement (14) est fixé, est fixée elle-même par une pièce de raccordement (22) au bras (17), lors de l'insertion du bras (17) dans la buse (18), la barrette (15) avec son fer de positionnement (14) est à l'extérieur de la buse (18) du système de barreaux (16).

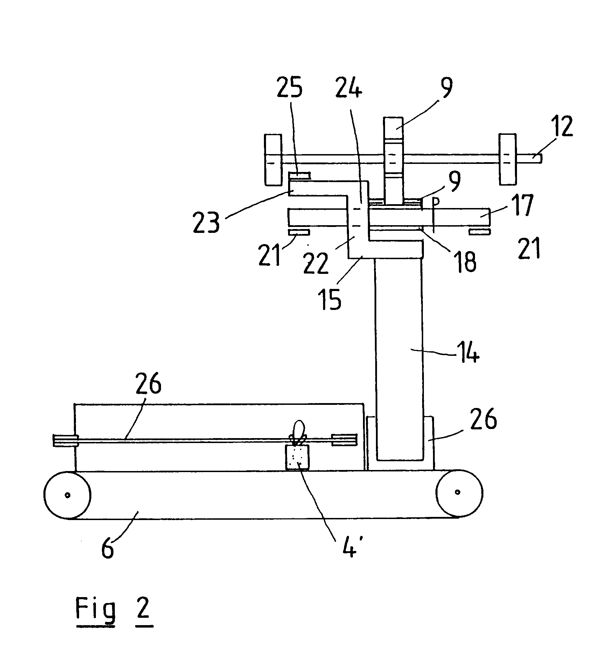

Par ailleurs, le système de barreaux (16) est encore doté d'un second bras (23) qui est fixé au bras (17) par l'intermédiaire d'une barrette de raccordement (24). Ce bras (23) se déplace parallèlement au bras (17) et, lors du déplacement de la chaîne (5) vers le bas, un peu derrière le bras (17) et un peu plus haut que le plan de glissement (21), contre une autre voie de guidage (25) de telle sorte que les deux bras (17) et (23) soient guidés entre les voies de guidage (21 et 25) (se référer à la figure 2).

Comme le bras (17) est inséré dans la buse (18) qui est fixée à la chaîne (5), le système de barreaux (16) peut basculer autour du bras (17), mais le déplacement est limité par la position respective des bras (17 et 23) vis-à-vis des voies de guidage (21 et 25).

Au-dessus de la machine, en oblique sur la chaîne (5), se trouve une bande de transport chargée (6) sur laquelle les pots à repiquer (4, 4′, 4˝...) sont disposés l'un derrière l'autre. Ces pots à repiquer (4, 4′,4˝...) s'appuient contre un ruban latéral de guidage (26) qui se déplace de manière synchrone avec la bande de transport chargée (6) de telle sorte que les pots à repiquer ne soient pas endommagés au cours de ce déplacement.

A l'extrémité de la bande de transport (6), les pots à repiquer (4, 4′, 4˝...) passent sous la chaîne (5) et sont poussés l'un après l'autre par les fers de positionnement successifs (14), qui, lorsqu'ils viennent en contact avec les pots à repiquer (4), basculent tout d'abord autour du bras (17) jusqu'à ce que le bras (23) soit retenu contre la voie de guidage (25).

En dessous de la chaîne (5) se trouve une voie de glissement (28) sous la forme d'une gouttière le long de laquelle est prévue une des parois latérales d'une série de lamelles élastiques (27) pour retenir les pots à repiquer (4, 4′, 4˝...). Ces moyens de freinage du déplacement descendant des pots à repiquer (4, 4′, 4˝...) sont forcés sous la pression des fers de positionnement si bien que les pots à repiquer (4, 4′, 4˝...) descendent progressivement sans être abîmés.

Au sol, la voie de glissement (28) opère en fonction de la profondeur du sillon ouvert par le soc (2) et le pot à repiquer (4) est déplacé dans le sillon par le fer (14). Tandis que le véhicule de traction (1) continue sa route, le fer de positionnement (14) maintient le pot à repiquer (4) droit dans le sillon et referme celui-ci sous l'action des roues de tassement (23). A ce moment-là, le fer de positionnement (14) se dégage du sol du fait du changement de direction de la chaîne (5) autour de la roue d'entraînement (7) et le système de barreaux (16) bascule avec son fer de positionnement (14) autour du bras (17). Le pot à repiquer se retrouve dans le sol libéré de toute pression, les fers de positionnement (14) continuent à se déplacer vers le haut et le cycle recommence.

La machine agricole selon la présente invention pour la plantation mécanique de plantes semées dans des pots à repiquer fonctionne de manière très simple. Elle permet de manipuler les pots à repiquer de manière automatique sans devoir intervenir manuellement, ce qui empêche tout endommagement de la terre comprimée.

L'intervalle entre les plantes respectives est réglable selon la nature de ces plantes, en modifiant la distance de deux systèmes de barreaux successifs (16) avec le fers de positionnement respectifs (14).

La machine agricole selon la présente invention n'est pas limitée à la forme de réalisation décrite. Des variantes peuvent être envisagées, par exemple, dans la mise en place des pots à repiquer à partir d'une bande de transport chargée qui, au lieu d'être en oblique sur la chaîne (5), pourrait être conçue parallèlement à cette chaîne, moyennant un système complémentaire pour pousser les pots à repiquer (4, 4′, 4˝...) latéralement afin de les amener sur la voie de glissement (28).

Une autre forme de réalisation de la machine agricole selon l'invention est constituée de deux ou plusieurs socs, chaînes et roues de tassement, qui opèrent parallèlement les uns aux autres, de telle sorte que plusieurs sillons soient tracés, remplis et recouverts en même temps.

De même, la chaîne (5) pourrait être montée selon un autre circuit sans que la machine agricole concernée sorte du cadre de la protection de la machine agricole selon l'invention comme défini dans les revendications.

## Revendications

1. Machine agricole pour la plantation mécanique de plantes semées préalablement dans des pots à repiquer, constituée au moins d'un soc, d'un système à chaîne et de roues de tassement, le système à chaîne étant constitué d'une part, d'une chaîne qui se déplace de manière continue et dotée de plaques de pression ou de fers de positionnement fixés à la chaîne, et d'autre part, d'une voie de glissement montée sous le trajet descendant de la chaîne, caractérisée en ce que cette voie de glissement est dotée de lames de freinage qui contiennent le mouvement glissant de ces pots à repiquer sous la pression du fer de positionnement concerné.

2. Machine agricole selon la revendication 1 caractérisé en ce que les lames de freinages sont des lames à ressort fixées parallèlement l'une à l'autre et en oblique à la paroi latérale de la voie de glissement.

3. Machine agricole suivant la revendication 1 et 2 caractérisé en ce que les fers de positionnement montés sur la chaîne sont fixés à un système de barreaux dont un bras peut être inséré dans une buse fixée à la chaîne.

4. Machine agricole selon la revendication 3, caractérisé en ce que le bras du systèmes de barreaux, auquel le fer de positionnement est fixé et qui est inséré dans une buse qui est fixée à la chaîne, est doté d'au moins une extrémité qui se déplace contre une voie de guidage, parallèlement au mouvement descendant de la chaîne, sous celle-ci et au-dessus de la voie de glissement sur laquelle glissent les pots à repiquer.

5. Machine agricole selon une quelconque des revendications 3 à 4, caractérisée en ce que le système de barreaux auquel le fer de positionnement est fixé est doté d'un second bras qui est fixé au premier bras par l'intermédiaire d'une barrette de raccordement et se déplace parallèlement au premier bras, mais légèrement derrière celui-ci et un peu plus haut que le plan de glissement, et se déplace également contre une autre voie de guidage parallèlement au mouvement descendant de la chaîne, sous celle-ci et au-dessus de la voie de glissement sur laquelle les pots à repiquer glissent vers le sol.

6. Machine agricole selon l'une quelconque des revendications précédentes, caractérisée en ce que le système de barreaux auquel le fer de positionnement est fixé peut basculer librement en va-et-vient autour d'un de ses bras, ce déplacement étant limité par des voies de guidage contre lesquelles les bras du système de barreaux peuvent s'appuyer.

7. Machine agricole selon l'une quelconque des revendications précédentes, dotée d'une bande de transport chargée qui amène les pots à repiquer l'un derrière l'autre vers la chaîne et la voie de glissement, caractérisée en ce qu'un ruban latéral de guidage est disposé parallèlement à cette bande de transport chargée, contre lequel ruban les pots à repiquer s'appuient et qui est entraîné en synchronisme avec la bande de transport chargée.

## Claims

1. Agricultural machine for mechanically planting plants sown beforehand in planting-out pots, consisting at least of a ploughshare, of a chain system and of wheels for packing down the soil, the chain system consisting, on the one hand, of a chain which moves continuously and which is equipped with pressure plates or positioning rods fixed to the chain and, on the other hand, of a chute mounted beneath the descending portion of the chain, characterized in that this chute is equipped with braking blades which hold back the sliding movement of these planting-out pots under the pressure of the respective positioning rod.

2. Agricultural machine according to Claim 1, characterized in that the braking blades are spring-mounted blades fixed parallel to each other and obliquely relative to the side wall of the chute.

3. Agricultural machine according to Claims 1 and 2, characterized in that the positioning rods mounted on the chain are fixed to a system of bars, one arm of which can be inserted into a cylinder fixed to the chain.

4. Agricultural machine according to Claim 3, characterized in that that arm of the system of bars to which the positioning rod is fixed and which is inserted into a cylinder fixed to the chain is equipped with at least one end which moves against a guide track, parallel to the descending movement of the chain, beneath the latter and above the chute down which the planting-out pots slide.

5. Agricultural machine according to either of Claims 3 and 4, characterized in that the system of bars to which the positioning rod is fixed is equipped with a second arm which is fixed to the first arm via a connecting rod and moves parallel to the first arm but slightly behind the latter and a little above the sliding plane, and also moves against another guide track parallel to the descending movement of the chain, beneath the latter and above the chute down which the planting-out pots slide towards the soil.

6. Agricultural machine according to any one of the preceding claims, characterized in that the system of bars to which the positioning rod is fixed can pivot freely to and fro about one of its arms, this movement being limited by guide tracks against which the arms of the system of bars can bear.

7. Agricultural machine according to any one of the preceding claims, equipped with a loaded conveyor belt which brings the planting-out pots one after the other towards the chain and the chute, characterized in that a lateral guide strip is arranged parallel to this loaded conveyor belt, against which strip the planting-out pots bear and which is driven synchronously with the loaded conveyor belt.

## Patentansprüche

1. Landwirtschaftliche Maschine zum mechanischen Einpflanzen von zuvor in Umpflanztöpfe eingesäten Pflanzen, bestehend aus wenigstens einer Pflugschar, einem Kettensystem und Verschließrädern, wobei das Kettensystem gebildet ist einerseits von einer Kette, die sich kontinuierlich bewegt und mit an der Kette befestigten Druckplatten oder Positioniereisen versehen ist, und andererseits von einer Gleitbahn, die unter dem sich abwärtsbewegenden Kettentrum angeordnet ist, dadurch gekennzeichnet, daß diese Gleitbahn mit Bremslamellen versehen ist, welche die Gleitbewegung dieser Umpflanztöpfe unter des Druck des betreffenden Positioniereisens halten.

2. Landwirtschaftliche Maschine nach Anspruch 1,
dadurch gekennzeichnet, daß die Bremslamellen federnde Lamellen sind, die zueinander parallel und schräg zur Seitenwand dar Gleitbahn angeordnet sind.

3. Landwirtschaftliche Maschine nach Anspruch 1 und 2,
dadurch gekennzeichnet, daß die an der Kette montierten Positioniereisen an einem Stabsystem befestigt sind, von dem ein Arm in eine an der Kette befestigte Hülse eingeführt werden kann.

4. Landwirtschaftliche Maschine nach Anspruch 3,
dadurch gekennzeichnet, daß der Arm des Stabsysteme, an dem das Positioniereisen befestigt ist und der in eine an der Kette befestigte Hülse eingeführt ist, mit wenigstens einem Ende versehen ist, das sich an einer zur Abwärtsbewegung der Kette parallelen Führungsbahn unterhalb der Kette und oberhalb der Gleitbahn, auf der die Umpflanztöpfe gleiten, bewegt.

5. Landwirtschaftliche Maschine nach einem der Ansprüche 3 bis 4,
dadurch gekennzeichnet, daß das Stabsystem, an dem das Positioniereisen befestigt ist, mit einem zweiten Arm versehen ist, der am ersten Arm mittels eines Verbindungssteges befestigt ist und sich parallel zum ersten Arm, aber etwas hinter diesem und etwas höher als die Gleitebene bewegt und sich ebenfalls an einer anderen, zur Abwärtsbewegung der Kette parallelen Führungsbahn unterhalb der Kette und oberhalb der Gleitbahn, auf der die Umpflanztöpfe in Richtung des Erdbodens gleiten, bewegt.

6. Landwirtschaftliche Maschine nach einem der vorhergehenden Ansprüche,
dadurch gekennzeichnet, daß das Stabsystem, an dem das Positioniereisen befestigt ist, um einen seiner Arme frei hin- und herschwenken kann, wobei diese Bewegung durch Führungsbahnen begrenzt wird, an denen sich die Arme des Stabsystems abstützen können.

7. Landwirtschaftliche Maschine nach einem der vorhergehenden Ansprüche, mit einem beladenen Transportband, welches die Umpflanztöpfe hintereinander zur Kette und zur Gleitbahn heranführt,
dadurch gekennzeichnet, daß parallel zu diesem beladenen Transportband ein seitliches Führungsband angeordnet ist, an dem sich die Umpflanztöpfe abstützen und das synchron mit dem beladenen Transportband angetrieben wird.
